# EUROPÄISCHE PATENTSCHRIFT

(11) **EP 2 761 385 B1**
(45) Veröffentlichungstag und Bekanntmachung des Hinweises auf die Patenterteilung: **24.04.2019**
(21) Anmeldenummer: 12770448.4
(22) Anmeldetag: 27.09.2012
(51) Int. Cl.: G05G 1/02, G05G 1/08

(54) **DREH-/DRÜCK-BEDIENVORRICHTUNG FÜR EIN MENSCH-MASCHINE-INTERFACE**
ROTARY/PUSH OPERATING DEVICE FOR A HUMAN-MACHINE INTERFACE
DISPOSITIF DE COMMANDE PAR ROTATION ET PRESSION POUR UNE INTERFACE HOMME-MACHINE

(30) Priorität: 27.09.2011 DE 102011083524
(43) Veröffentlichungstag der Anmeldung: 06.08.2014
(73) Patentinhaber: Behr-Hella Thermocontrol GmbH, 70469 Stuttgart (DE)
(72) Erfinder: FUST, Winfried, 59556 Lippstadt (DE); VOGT, Frank, 33165 Lichtenau (DE)
(74) Vertreter: dompatent von Kreisler Selting Werner - Partnerschaft von Patent- und Rechtsanwälten mbB
(86) Internationale Anmeldenummer: PCT/EP2012/069037
(87) Internationale Veröffentlichungsnummer: WO 2013/045528

(56) Entgegenhaltungen:
- EP-A1- 2 381 330
- DE-A1-102006 057 311
- US-A1- 2004 154 910

## Beschreibung

Die Erfindung betrifft eine Dreh-/Drück-Bedienvorrichtung für ein Mensch-Maschine-Interface, insbesondere für eine Bedieneinheit eines Fahrzeugs.

Dreh-/Drück-Bedienvorrichtungen zur Dateneingabe in einem Fahrzeug über ein sogenanntes Mensch-Maschine-Interface bzw. für Bedieneinheiten eines Fahrzeugs sind im Stand der Technik bekannt. Im Regelfall ist eine Dreh-/ Drück-Bedienvorrichtung mit einem Dreh-/Drückelement versehen. Durch Drehen des Dreh-/Drückelements werden Buchstaben, Zeichen oder Funktionen ausgewählt und durch Drücken bestätigt. Nach dem Bestätigen einer solchen Eingabe wird eine der Eingabe entsprechende Aufgabe durchgeführt.

Aus DE-A-102 61 284 ist ein drehbares Bedienelement bekannt, das sich im Falle einer Krafteinwirkung längs seiner Drehachse bewegen lässt. Dieses Bedienelement weist einen gezahnten Abschnitt auf, welcher mit einem Zahnrad in Eingriff steht, um die Drehung des Bedienelements auf das Zahnrad zu übertragen. Die Drehachse des Zahnrads ist dabei parallel und seitlich zu der Drehachse des Bedienelements angeordnet. Durch diese Maßnahme ist eine Bewegung des Bedienelements längs seiner Drehachse möglich. Der gezahnte Abschnitt bildet vorzugsweise selbst ein Zahnrad, so dass eine volle Umdrehung des Bedienelements möglich ist.

Im Stand der Technik sind ferner Dreh-/Drück-Bedienvorrichtungen bekannt, bei denen das Dreh-/Drückelement eine normalerweise gegen Verdrehungen gesicherte zentrale Taste oder mehrere zentrale Tasten aufweist, die innerhalb des drehbaren Drehelements angeordnet sind. Diese Tasten sind niederdrückbar und dienen der Dateneingabe bzw. der Bestätigung von Dateneingaben. Das Drehbedienelement selbst ist dabei allerdings nicht niederdrückbar. Beispiele für den zuvor genannten Stand der Technik von Dreh-/Drück-Bedienvorrichtungen finden sich in DE-A-10 2006 018 518, DE 10-A-2004 054 178, DE-A-199 64 131, DE-A-101 37 883, EP-B-0282 817 und GB-A-2 186 668. US 2004/0154910 A1 bildet den nächstliegenden Stand der Technik für den Gegenstand des Anspruchs 1 und offenbart eine Dreh-/Drück-Bedienvorrichtung mit einem Bedienelement, das um eine Führungsachse in einer Drehbewegung drehbar und längs der Führungsachse axial bewegbar ist, einer Lagereinheit mit einem Außenlagerring und einem Innenlagerring, wobei einer der Lagerringe mit dem Bedienelement drehfest verbunden und von diesem mitdrehbar ist, einem Drehsensor zur Erfassung der Drehbewegung des Bedienelements, einem bei einer axialen Bewegung des Bedienelements längs der Führungsachse aus einer Ausgangsposition in eine Niederdrückposition ansprechenden Drucksensor und einem Rückholelement zum automatischen Zurückbewegen des Bedienelements von der Niederdrückposition in die Ausgangsposition, wobei das Rückholelement direkt oder indirekt auf die Lagereinheit einwirkt.

Eine Aufgabe der Erfindung ist es, eine Dreh-/Drück-Bedienvorrichtung für ein Mensch-Maschine-Interface zu schaffen, wobei die Dreh-/Drück-Bedienvorrichtung mit einer einfachen und störunanfälligen Konstruktion zur Bewegung eines Dreh-/Drückelements in zwei orthogonalen Richtungen versehen ist. Zur Lösung dieser Aufgabe wird mit der Erfindung eine Dreh-/Drück-Bedienvorrichtung für ein Mensch-Maschine-Interface, insbesondere für eine Fahrzeugkomponente wie z.B. eine Klimaanlage, vorgeschlagen, wobei die Dreh-/ Drück-Bedienvorrichtung die Merkmale des Anspruchs 1 aufweist. Einzelne Ausgestaltungen der Erfindung sind Gegenstand der Unteransprüche.

Nach der Erfindung kann ferner noch vorgesehen sein, dass
- eine Drehrasteinheit zwischen dem Innenlagerring und dem Außenlagerring oder zwischen einem mit dem Innenlagerring mechanisch gekoppelten ersten Bauteil und einem mit dem Außenlagerring mechanisch gekoppelten zweiten Bauteil angeordnet ist,
- wobei die Drehrasteinheit eine mit Rastvertiefungen versehene Rastkulisse und mindestens einen in eine der Rastvertiefungen hinein- und aus dieser herausbewegenden Rastvorsprung aufweist,
- wobei die Rastkulisse und der mindestens eine Rastvorsprung relativ zueinander bewegbar sind und
- wobei die Rastkulisse und/oder der mindestens eine Rastvorsprung elastisch bewegbar oder verformbar ist/sind.

Die erfindungsgemäße Dreh-/Drück-Bedienvorrichtung weist ein Dreh-/ Drückelement auf, das mit Hilfe einer Wälzlagereinheit um eine Drehachse drehbar gelagert ist. Überdies ist das Dreh-/Drückelement längs der Führungsachse axial bewegbar. Die Wälzlagereinheit weist einen Außenlagerring und einen Innenlagerring auf. Zwischen beiden befinden sich Wälzkörper. Einer der beiden Lagerringe (typischerweise der Außenlagerring) ist mit dem Dreh-/ Drückelement verbunden, so dass der Außenlagerring bei Drehung des Dreh-/ Drückelements mitgedreht wird. Der andere Lagerring (typischerweise der Innenlagerring) ist an einer feststehenden Führungsachse, die die Drehachse bildet, axial bewegbar geführt und gegen Verdrehungen an der Führungsachse gesichert. Die Drehbewegung des Dreh-/Drückelements wird durch einen Drehsensor (beispielsweise einen Absolut- oder Relativ-Wegsensor) erfasst. Hier bietet sich beispielsweise ein optischer Sensor in Form einer Lichtschranke o.dgl. oder aber ein mechanischer Sensor in Form eines Drehpotentiometers an, welches mit dem Dreh-/Drückelement kämmt oder in Drehverbindung steht. Andere Ausgestaltungen von Drehsensoren sind ebenfalls denkbar. Eine Drückbewegung des Dreh-/Drückelements wird mit Hilfe eines Drucksensors erkannt, der ein Niederdrücken des Dreh-/Drückelements längs der Führungsachse aus einer Ausgangsposition bis in eine Niederdrückposition anspricht. Ein derartiger Drucksensor kann in seiner einfachsten Ausgestaltung als (End-) Schalter ausgebildet sein. Die automatische Zurückbewegung des Dreh-/ Drückelements aus der Niederdrückposition in die Ausgangsposition erfolgt durch ein Rückholelement. Erfindungsgemäß wirkt nun dieses Rückholelement direkt oder indirekt auf die Wälzlagereinheit ein, so dass also das gesamte Wälzlager und damit das Dreh-/Drückelement niedergedrückt wird, wenn beispielsweise zentral auf das Dreh-/Drückelement eine Niederdrückkraft ausgeübt wird.

Alternativ oder zusätzlich zur translatorischen Bewegbarkeit der Wälzlagereinheit kann die erfindungsgemäße Dreh-/Drückbedienvorrichtung eine Drehrasteinheit aufweist, die zwischen dem Innenlagerring und dem Außenlagerring oder zwischen einem mit dem Innenlagerring mechanisch gekoppelten ersten Bauteil und einem mit dem Außenlagerring mechanisch gekoppelten zweiten Bauteil angeordnet ist. Die Drehrasteinheit weist eine Rastkulisse mit Rastvertiefungen und mindestens einen in eine der Rastvertiefungen hinein- und aus dieser herausbewegbaren Rastvorsprung auf. Die Rastkulisse und der mindestens eine Rastvorsprung sind relativ zueinander bewegbar. Die Rastkulisse und/oder der mindestens eine Rastvorsprung ist elastisch bewegbar bzw. verformbar.

In vorteilhafter Weiterbildung der Erfindung ist vorgesehen, dass das Rückholelement direkt oder indirekt auf den Innenlagerring der Wälzlagereinheit einwirkt. Hierbei kann ferner mit Vorteil vorgesehen sein, dass das Rückholelement eine Schraubenfeder aufweist. Dabei können ein oder mehrere Rückholelemente direkt oder indirekt auf die Wälzlagereinheit einwirken.

Typischerweise ist das Dreh-/Drückelement im Wesentlichen kappenförmig mit einer Stirnseite und einer Umfangsseite ausgebildet. Stirnseitig weist das Dreh-/Drückelement zweckmäßigerweise ein feststehender Tastenkörper sowie umfangsseitig ein um den Tastenkörper drehbares Ringelement auf, wobei der Tastenkörper direkt oder indirekt mit dem Innenlagerring und das Ringelement direkt oder indirekt mit dem Außenlagerring der Wälzlagereinheit verbunden ist.

Wird bei einem derart ausgebildeten Dreh-/Drückelement nun auf den feststehenden Tastenkörper, d.h. auf die Stirnseite des kappenförmigen Dreh-/ Drückelements gedrückt, so bewegt sich das gesamte Dreh-/Drückelement also mit dem drehbaren Ringelement nieder. Genauso bewegt sich der feststehende Tastenkörper nach unten, wenn beispielsweise eine Niederdrückkraft auf das Ringelement des Dreh-/Drückelements ausgeübt wird.

Zur mechanischen Stabilisierung des Dreh-/Drückelements ist es zweckmäßig, wenn die Wälzlagereinheit zwei längs der Führungsachse axial voneinander beabstandete Reihen von Wälzkörpern aufweist.

Mit dem erfindungsgemäßen Konzept ist es möglich, eine Dreh-/Drück-Bedieneinheit mit minimalem Bauraumbedarf zu realisieren. Dabei kann die Vorrichtung mit einem Wälzlager aus Kunststoff, also aus Kunststoff-Innen- und Außenlagerringen realisiert werden. In eine derartige Konstruktion kann entweder die Drehhaptik-Erzeugung (z.B. Rastung) oder die translatorische Führung oder beides integriert sein. So können bei Drehstellern mit kleinen Durchmessern sämtliche gewünschten mechanischen Funktionen umgesetzt werden, wobei gleichzeitig ausreichend Platz für die Anordnung einer feststehenden Drucktaste beispielsweise im Zentrum des Dreh-/Drückstellers verbleibt.

Die Erfindung wird nachfolgend anhand eines Ausführungsbeispiels und unter Bezugnahme auf die Zeichnung näher erläutert. Im Einzelnen zeigen dabei:
- Fig. 1: einen Längsschnitt durch einen Dreh-/Drücksteller gemäß einem Ausführungsbeispiel der Erfindung,
- Fig. 2: eine Querschnittsansicht entlang der Ebene II-II der Fig. 1,
- Fig. 3: der Dreh-/Drücksteller gemäß Fig. 1 mit angedeuteter Kraftflusslinie bei Ausübung einer Niederdrückkraft auf das Zentrum des Dreh-/ Drückstellers und
- Fig. 4: der Dreh-/Drücksteller gemäß Fig. 1 mit angedeuteter Kraftflusslinie bei Ausübung einer Niederdrückkraft auf den Randbereich des Dreh-/ Drückstellers.

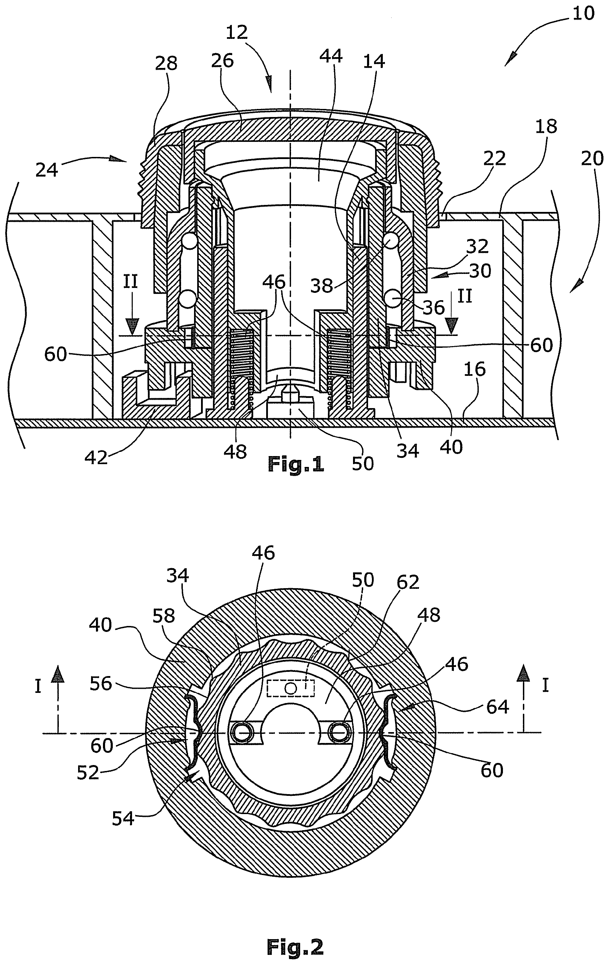

In Fig. 1 ist schematisch der Aufbau einer Dreh-/Drück-Bedienvorrichtung 10 gezeigt. Diese Bedienvorrichtung 10 weist ein Dreh-/Drück-Bedienelement 12 auf, das um eine von einer Hohlwelle definierten Führungs-(Dreh-)achse 14 drehbar gelagert ist. Die Führungsachse 14 ragt von einer Trägerplatte 16 auf, bei der es sich im Regelfall um eine Leiterplatine handelt. Beabstandet zur Trägerplatte 16 befindet sich um das Dreh-/Drück-Bedienelement 12 herum eine Frontblende 18 eines Gehäuses 20 der Dreh-/Drück-Bedienvorrichtung 10.

In der Frontblende 18 ist eine zumeist runde Aussparung 22 ausgebildet, durch die hindurch das Dreh-/Drück-Bedienelement 12 aufragt.

Das Dreh-/Drück-Bedienelement 12 weist ein manuell ergreifbares kappenförmiges oberes Bedienteil 24 auf, das einen zentralen feststehend angeordneten Tastenkörper 26 und ein diesen umgebendes, drehbares Ringelement 28 aufweist, das z.B. mit einer gerändelten Außen-(Anfass-)Seite versehen ist. Der Tastenkörper 26 ist nur zusammen mit dem Ringelement 28 niederdrückbar und gegen Verdrehungen gesichert, dreht sich also mit dem Ringelement 28 nicht mit. So kann der Tastenkörper 26 beispielsweise als feststehendes Symbol- oder Touch- bzw. dergleichen Dateneingabefeld, das sich nicht mitdreht, genutzt werden.

Das Dreh-/Drück-Bedienelement 12 weist ferner eine Wälzlagereinheit 30 auf, die einen Außenlagerring 32, einen Innenlagerring 34 und zwischen beiden in diesem Ausführungsbeispiel zwei Gruppen von Wälzkörpern 36,38 aufweist.

Das Ringelement 28 des Bedienteils 24 ist fest mit dem Außenlagerring 32 verbunden, so dass dieser gedreht wird, wenn das Ringelement 28 gedreht wird. Der Innenlagerring 34 ist gegen Verdrehungen gesichert und axial geführt an der Führungsachse 14 angeordnet.

Unterhalb des drehbaren Außenlagerrings 32 befindet sich ein Drehkranz 40, der mit einer Lichtschranke als Drehsensor 42 zusammenwirkt. Der Drehkranz 40 wird bei Drehung des Ringelements 28 gedreht und die Lichtschranke, d.h. der Drehsensor 42, erkennt das Ausmaß der Drehbewegung. Der Drehkranz 40 kann zusätzlich eine Lichtleiterfunktion zur optischen Anzeige an dem Ringelement 28 aufweisen. Ferner könnte der Drehkranz 40 mit einer Verzahnung versehen sein, um z.B. ein Drehpotentiometer als Drehsensor bzw. Drehwegsensor (anstelle der Lichtschranke) zu betätigen. Die Drehbewegung des Dreh-/Drück-Bedienelements 12 kann z.B. alternativ durch einen Hall-Sensor erfasst werden.

Wie in den Fign. 1 und 2 zu erkennen ist, ist innerhalb des Bereichs des Innenlagerrings 34, der axial über die Führungsachse 14 übersteht, eine nach oben hin aufgeweitete Einsatzhülse 44, die z.B. eine Reflektorfunktion hat, eingesetzt. Diese Einsatzhülse 44 trägt den feststehenden Tastenkörper 26. Die Einsatzhülse 44 ist über (z.B. aus Symmetriegründen) zwei Rückholfedern 46 gegenüber der Trägerplatte 16 abgestützt. Auf der Trägerplatte 16 befindet sich in dem von der Einsatzhülse 44 eingenommenen Bereich ferner ein Drucksensor 50, der in diesem Ausführungsbeispiel als Endschalter ausgeführt ist und von einem an der Einsatzhülse 44 ausgebildeten Vorsprung 48 betätigt wird.

Beim Niederdrücken des Dreh-/Drück-Bedienelements 12 wird die Feder 46 komprimiert und der Drucksensors 50 betätigt. Sobald die Niederdrückkraft aufgehoben ist, bewegt die Rückholfeder 46 das Dreh-/Drück-Bedienelement 12 wieder in die Position gemäß Fig. 1.

Es sei an dieser Stelle erwähnt, dass auch andere Positionen für den Drucksensor, die Rückholfeder und den Drehsensor möglich sind. So könnte beispielsweise die Rückholfeder 46 auch direkt am Innenlagerring 34 angreifen. In dem gezeigten Ausführungsbeispiel greift die Rückholfeder 46 an einem starr mit dem Innenlagerring 34 verbundenen Element, nämlich der Einsatzhülse 44 an.

Wie insbesondere in Fig. 2 zu sehen, befindet sich konstruktiv zwischen dem Innenlagerring 34 und dem mit dem Außenlagerring 32 verbundenen Drehkranz 40 eine Drehrasteinheit 52, die eine Rastkulisse 54 mit alternierend aufeinanderfolgend angeordneten (Rast-)Vertiefungen 56 und Erhöhungen 58 und - z.B. aus Symmetriegründen - zwei federelastische Rastvorsprünge 60 aufweist. Die Rastkulisse 54 ist in diesem Ausführungsbeispiel an der dem Drehkranz 40 zugewandten Außenseite 62 des Innenlagerrings 34 (oder einer an dieser angeordneten Komponente) ausgebildet, während die Rastvorsprünge 60 an dem Drehkranz 40 gehalten sind. Die Rastvorsprünge 60 können aber auch an dem Außenlagerring 32 direkt gehalten sein. Die beiden Rastvorsprünge 60 sind von (Metall-)Federbügeln 64 gebildet.

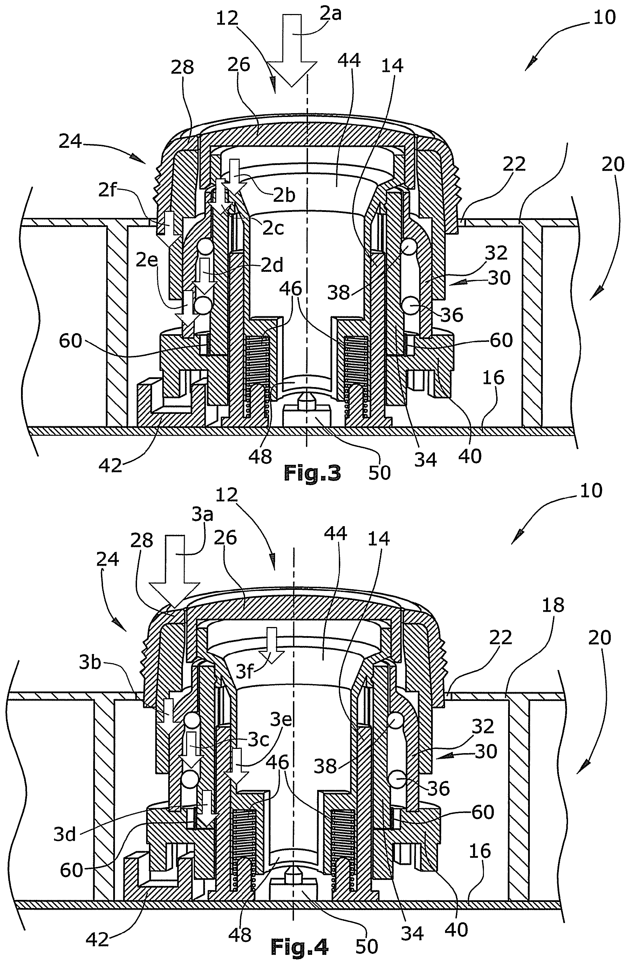

Anhand der Fign. 3 und 4 wird das erfindungsgemäß realisierte "Mitnehmerkonzept" bei einer Drückbetätigung des Dreh-/Drück-Bedienelements erläutert, was durch die Pfeile 2a bis 2f bzw. 3a bis 3f hervorgehoben ist. Gemäß Fig. 3 wird die Niederdrückkraft auf den Tastenkörper 26 ausgeübt (siehe den Pfeil 2a). Durch Niederdrücken des Tastenkörpers 26 wird auch die Einsatzhülse 44 niedergedrückt (siehe den Pfeil 2b), und zwar gegen die Kraft der Rückholfedern 46. Mit der Einsatzhülse 44 starr verbunden ist der Innenlagerring 34, durch den über die Wälzkörper 36,38 der Wälzlagereinheit 30 dessen Außenlagerring 32 mit nach unten bewegt wird (siehe die Pfeile 2c, 2d und 2e). Mit dem Außenlagerring 32 wiederum starr verbunden ist das Ringelement 28 des Dreh-/Drück-Bedienelements 12, das daher mit dem Tastenkörper 26 niederbewegt wird (siehe den Pfeil 2f).

Fig. 4 zeigt das Mitnehmerkonzept, wenn die Niederdrückkraft auf das Ringelement 28 des Dreh-/Drück-Bedienelements 12 ausgeübt wird (siehe den Pfeil 3a). Beim Niederdrücken des Ringelements 28 wird der Außenlagerring 32 niedergedrückt (siehe den Pfeil 3b). Über die Wälzkörper 36,38 nimmt der Außenlagerring 32 den Innenlagerring 34 mit (siehe den Pfeil 3c). Damit wird auch dieser Innenlagerring 34 nach unten bewegt (siehe den Pfeil 3d). Starr verbunden mit dem Innenlagerring 34 ist die Einsatzhülse 44, die also ebenfalls nach unten bewegt wird (siehe den Pfeil 3e) und damit die Rückholfedern 46 komprimiert. Mit der Einsatzhülse 44 starr verbunden ist der Tastenkörper 26, so dass dieser letztendlich zusammen mit dem Ringelement 28 niederbewegt wird (siehe den Pfeil 3f).

### BEZUGSZEICHENLISTE

- 10: Bedienvorrichtung
- 12: Dreh-/Drück-Bedienelement
- 14: Führungsachse des Dreh-/Drück-Bedienelements
- 16: Trägerplatte im Gehäuse
- 18: Frontblende des Gehäuses
- 20: Gehäuse
- 22: Aussparung in der Frontblende
- 24: Bedienteil des Dreh-/Drück-Bedienelements
- 26: Tastenkörper des Bedienteils
- 28: Ringelement des Bedienteils um dessen Tastenkörper herum
- 30: Wälzlagereinheit
- 32: Außenlagerring der Wälzlagereinheit
- 34: Innenlagerring der Wälzlagereinheit
- 36: Wälzkörper
- 38: Wälzkörper
- 40: Drehkranz
- 42: Drehsensor
- 44: Einsatzhülse
- 46: Rückholfeder
- 48: Vorsprung in der Einsatzhülse
- 50: Drucksensor
- 52: Drehrasteinheit
- 54: Rastkulisse der Drehrasteinheit
- 56: Rastvertiefungen der Rastkulisse
- 58: Erhöhungen der Rastkulisse
- 60: Rastvorsprünge
- 62: Außenseite des Innenlagerrings
- 64: (Metall-)Federbügel der Rastvorsprünge

## Patentansprüche

1. Dreh-/Drück-Bedienvorrichtung für ein Mensch-Maschine-Interface, insbesondere für eine Fahrzeugkomponente wie z.B. eine Klimaanlage, mit
- einem Bedienelement (12), das um eine Führungsachse (14) in einer Drehbewegung drehbar und längs der Führungsachse (14) axial bewegbar ist,
- einer Wälzlagereinheit (30) mit einem Außenlagerring (32), einem Innenlagerring (34) und mit zwischen diesen angeordneten Wälzkörpern (36,38),
- wobei einer der Lagerringe (32,34) mit dem Bedienelement (12) drehfest verbunden und von diesem mitdrehbar ist,
- einem Drehsensor (42) zur Erfassung der Drehbewegung des Bedienelements (12),
- einem bei einer axialen Bewegung des Bedienelements (12) längs der Führungsachse (14) aus einer Ausgangsposition in eine Niederdrückposition ansprechenden Drucksensor (50) und
- einem Rückholelement (46) zum automatischen Zurückbewegen des Bedienelements (12) von der Niederdrückposition in die Ausgangsposition,
- wobei das Rückholelement (46) direkt oder indirekt auf die Wälzlagereinheit (30) einwirkt und
- wobei der andere der Lagerringe (32,34) an der Führungsachse (14) axial bewegbar geführt und an dieser gegen Verdrehen gesichert ist.

2. Dreh-/Drück-Bedienvorrichtung für ein Mensch-Maschine-Interface nach Anspruch 1, ferner **gekennzeichnet durch**
- eine Drehrasteinheit (52), die zwischen dem Innenlagerring (34) und dem Außenlagerring (32) oder zwischen einem mit dem Innenlagerring (34) mechanisch gekoppelten ersten Bauteil und einem mit dem Außenlagerring (32) mechanisch gekoppelten zweiten Bauteil (40) angeordnet ist,
- wobei die Drehrasteinheit (52) eine mit Rastvertiefungen (56) versehene Rastkulisse (54) und mindestens einen in eine der Rastvertiefungen (56) hinein- und aus dieser herausbewegenden Rastvorsprung (60) aufweist,
- wobei die Rastkulisse (54) und der mindestens eine Rastvorsprung (60) relativ zueinander bewegbar sind und
- wobei die Rastkulisse (54) und/oder der mindestens eine Rastvorsprung (60) elastisch bewegbar oder verformbar ist/sind.

3. Dreh-/Drück-Bedienvorrichtung nach Anspruch 2, **dadurch gekennzeichnet, dass** das Rückholelement (46) direkt oder indirekt auf den Innenlagerring (34) der Wälzlagereinheit (30) einwirkt.

4. Dreh-/Drück-Bedienvorrichtung nach Anspruch 2 oder 3, **dadurch gekennzeichnet, dass** das Rückholelement (46) eine Schraubenfeder aufweist.

5. Dreh-/Drück-Bedienelement nach einem der Ansprüche 1 bis 4, **dadurch gekennzeichnet, dass** mehrere Rückholelemente (46) direkt oder indirekt auf die Wälzlagereinheit (30) einwirken.

6. Dreh-/Drück-Bedienelement nach einem der Ansprüche 1 bis 5, **dadurch gekennzeichnet, dass** das Dreh-/Drückelement (12) im Wesentlichen kappenförmig mit einer Stirnseite und einer Umfangsseite ausgebildet ist und stirnseitig einen feststehenden Tastenkörper (26) sowie umfangsseitig ein um den Tastenkörper (26) drehbares Ringelement (28) aufweist und dass der Tastenkörper (26) direkt oder indirekt mit dem Innenlagerring (34) und das Ringelement (28) direkt oder indirekt mit dem Außenlagerring (32) der Wälzlagereinheit (30) verbunden ist.

7. Dreh-/Drück-Bedienelement nach einem der Ansprüche 1 bis 6, **dadurch gekennzeichnet, dass** die Wälzlagereinheit (30) zwei längs der Führungsachse (14) axial voneinander beabstandete Reihen von Wälzkörpern (36,38) aufweist.

8. Dreh-/Drück-Bedienelement nach einem der Ansprüche 1 bis 7, **dadurch gekennzeichnet, dass** der mindestens eine Rastvorsprung (60) als (Metall-)Federbügel (64) ausgebildet ist.

9. Dreh-/Drück-Bedienelement nach einem der Ansprüche 1 bis 8, **dadurch gekennzeichnet, dass** die Drehrasteinheit (52) auf einander zugewandten Seiten des Außenlager- und des Innenlagerrings (32,34) oder von mit diesen mechanisch gekoppelten Bauteilen (40) angeordnet ist.

## Claims

1. A rotary/push operating device for a human-machine interface, in particular for a vehicle component, such as an air conditioning system, comprising
- an operating element (12) which is adapted to be rotated in a rotary movement about a guide shaft (14) and to be axially moved along said guide shaft (14),
- a roller bearing unit (30) having an outer bearing ring (32), an inner bearing ring (34) and rolling bodies (36, 38) arranged therebetween,
- wherein one of said bearing rings (32, 34) is connected in a rotationally fixed manner with said operating element (12) and can be rotated therewith,
- a rotation sensor (42) for sensing the rotary movement of said operating element (12),
- a pressure sensor (50) responding to an axial movement of said operating element (12) from a starting position into a depressed position along said guide shaft (14), and
- a return element (46) for automatically moving back said operating element (12) from the depressed position into the starting position,
- wherein said return element (46) directly or indirectly acts upon said roller bearing unit (30), and
- wherein the other one of said bearing rings (32, 34) is adapted to be guided in an axially movable manner along said guide shaft (14) and is secured against rotation at the latter.

2. The rotary/push operating device for a human-machine interface according to claim 1, further **characterized by**
- a rotary arresting unit (52) arranged between the inner bearing ring (34) and the outer bearing ring (32) or between a first component mechanically coupled with said inner bearing ring (34) and a second component (40) mechanically coupled with said outer bearing ring (32),
- wherein said rotary arresting unit (52) includes an arresting template (54) provided with arresting recesses (56) and at least one arresting projection (60) moving into and out of one of said arresting recesses (56),
- wherein said arresting template (54) and said at least one arresting projection (60) are adapted to be moved relative to each other, and
- wherein said arresting template (54) and/or said at least one arresting projection (60) is/are adapted to be elastically moved or deformed.

3. The rotary/push operating device according to claim 2, **characterized in that** the return element (46) directly or indirectly acts upon the inner bearing ring (34) of the rolling bearing unit (30).

4. The rotary/push operating device according to claim 2 or 3, **characterized in that** the return element (46) comprises a coil spring.

5. The rotary/push operating device according to any one of claims 1 to 4, **characterized in that** a plurality of return elements (46) directly or indirectly act upon the rolling bearing unit (30).

6. The rotary/push operating device according to any one of claims 1 to 5, **characterized in that** the rotary/push element (12) is of an essential cap-shaped configuration having a front side and a circumferential side and comprising a fixed key body (26) at its front side as well as a ring element (28) adapted to rotate about said key body (26) at its circumferential side, and that said key body (26) is directly or indirectly connected with the inner bearing ring (34) and said ring element (28) is directly or indirectly connected with the outer bearing ring (32) of the rolling bearing unit (30).

7. The rotary/push operating device according to any one of claims 1 to 6, **characterized in that** the rolling bearing unit (30) comprises two rows of rolling bodies (36, 38) axially spaced apart from each other along the guide shaft (14).

8. The rotary/push operating device according to any one of claims 1 to 7, **characterized in that** the at least one arresting projection (60) is configured as a (metal) spring clip (64).

9. The rotary/push operating device according to any one of claims 1 to 8, **characterized in that** the rotary arresting unit (52) is arranged at sides facing each other of the outer bearing and the inner bearing ring (32, 34) or of components (40) mechanically coupled therewith.

## Revendications

1. Dispositif de commande de rotation/poussée destiné à une interface homme-machine, en particulier pour un composant de véhicule comme par exemple un système de climatisation, le dispositif comprenant
- un élément de commande (12) qui peut tourner sur un axe de guidage (14) suivant un mouvement de rotation et qui peut être déplacé axialement le long de l'axe de guidage (14),
- une unité formant palier à roulement (30) comportant une bague de palier à roulement extérieure (32), une bague de palier à roulement intérieure (34) et des éléments de roulement (36, 38) disposés entre ceux-ci,
- l'une des bagues de palier à roulement (32, 34) étant reliée solidairement en rotation à l'élément de commande (12) et pouvant être entraînée en rotation par celui-ci,
- un capteur de rotation (42) destiné à détecter le mouvement de rotation de l'élément de commande (12),
- un capteur de poussée (50) qui répond à un mouvement axial de l'élément de commande (12) le long de l'axe de guidage (14) d'une position de départ à une position à basse poussée
- un élément de rappel (46) destiné à ramener automatiquement l'élément de commande (12) de la position à basse poussée à la position de départ,
- l'élément de rappel (46) agissant directement ou indirectement sur l'unité formant palier à roulement (30) et
- l'autre des bagues de palier à roulement (32, 34) étant guidée de manière mobile axialement sur l'axe de guidage (14) et bloquée en rotation sur celui-ci.

2. Dispositif de commande de rotation/poussée destiné à une interface homme-machine selon la revendication 1, **caractérisé en outre par**
- une unité de blocage en rotation (52) disposée entre la bague de palier à roulement intérieure (34) et la bague de palier à roulement extérieure (32) ou entre un premier composant couplé mécaniquement à la bague de palier à roulement intérieure (34) et un deuxième composant (40) couplé mécaniquement à la bague de palier à roulement extérieure (32),
- l'unité de blocage en rotation (52) comportant une coulisse de blocage (54) pourvue d'évidements de blocage (56) et au moins une saillie de blocage (60) entrant dans l'un des évidements de blocage (56) et sortant de celui-ci,
- la coulisse de blocage (54) et l'au moins une saillie de blocage (60) étant déplaçables l'une par rapport à l'autre et
- la coulisse de blocage (54) et/ou l'au moins une saillie de blocage (60) étant déplaçables ou déformables élastiquement.

3. Dispositif de commande de rotation/poussée selon la revendication 2, **caractérisé en ce que** l'élément de rappel (46) agit directement ou indirectement sur la bague de palier à roulement intérieure (34) de l'unité de palier à roulement (30).

4. Dispositif de commande de rotation/poussée selon la revendication 2 ou 3, **caractérisé en ce que** l'élément de rappel (46) comporte un ressort hélicoïdal.

5. Élément de commande de rotation/poussée selon l'une des revendications 1 à 4, **caractérisé en ce que** plusieurs éléments de rappel (46) agissent directement ou indirectement sur l'unité formant palier à roulement (30) .

6. Élément de commande de rotation/poussée selon l'une des revendications 1 à 5, **caractérisé en ce que** l'élément de rotation/poussée (12) est sensiblement en forme de capuchon pourvu d'un côté frontal et d'un côté périphérique et comporte du côté frontal un corps de bouton fixe (26) et du côté périphérique un élément annulaire (28) pouvant tourner autour du corps de bouton (26) et **en ce que** le corps de bouton (26) est relié directement ou indirectement à la bague de palier à roulement intérieure (34) et l'élément annulaire (28) est relié directement ou indirectement à la bague de pallier de roulement extérieure (32) de l'unité formant palier à roulement (30).

7. Élément de commande de rotation/poussée selon l'une des revendications 1 à 6, **caractérisé en ce que** l'unité formant palier à roulement (30) comporte deux rangées d'éléments de roulement (36,38) axialement espacées le long de l'axe de guidage (14).

8. Élément de commande de rotation/poussée selon l'une des revendications 1 à 7, **caractérisé en ce que** l'au moins une saillie de blocage (60) a une forme d'étrier à ressort (métallique) (64).

9. Élément de commande de rotation/poussée selon l'une des revendications 1 à 8, **caractérisé en ce que** l'unité de blocage en rotation (52) est disposé sur des côtés se faisant face de la bague de palier extérieure et de la bague de palier intérieure (32, 34) ou de composants (40) couplés mécaniquement à celles-ci.
